# EUROPÄISCHE PATENTSCHRIFT

(11) **EP 2 659 248 B1**
(45) Veröffentlichungstag und Bekanntmachung des Hinweises auf die Patenterteilung: **23.09.2015**
(21) Anmeldenummer: 11801748.2
(22) Anmeldetag: 22.12.2011
(51) Int. Cl.: G01L 7/08, G01L 19/06

(54) **DRUCKSENSOR MIT KOMPRESSIBLEM ELEMENT**
PRESSURE SENSOR HAVING A COMPRESSIBLE ELEMENT
CAPTEUR DE PRESSION À ÉLÉMENT COMPRESSIBLE

(30) Priorität: 27.12.2010 DE 102010056335
(43) Veröffentlichungstag der Anmeldung: 06.11.2013
(60) Teilanmeldung: 15179265.2
(73) Patentinhaber: Epcos AG, 81669 München (DE)
(72) Erfinder: WOHLGEMUTH, Christian, 12249 Berlin (DE)
(74) Vertreter: Epping - Hermann - Fischer
(86) Internationale Anmeldenummer: PCT/EP2011/073854
(87) Internationale Veröffentlichungsnummer: WO 2012/089625

(56) Entgegenhaltungen:
- WO-A1-98/31997
- WO-A1-2010/013216
- WO-A2-2008/078184
- DE-A1-102007 060 184
- DE-U1-202009 014 795

## Beschreibung

Es wird ein Drucksensor angegeben, der beispielsweise als Differenzdrucksensor, Relativdrucksensor oder Absolutdrucksensor ausgebildet ist. Der Drucksensor ist vorzugsweise mit einem fluiden Medium, beispielsweise Öl, gefüllt.

In den Druckschriften US 4 543 832 A und US 4 218 925 A sind Differenzdrucksensoren beschrieben.

In den Druckschriften DE 100 23 589 A1 und US 5 792 958 A sind Drucksensoren beschrieben, bei denen ein kompressibles Material vorgesehen ist.

In der Druckschrift DE 20 2009 014795 U1 ist eine Druckmesseinrichtung mit einem Druckmessmodul beschrieben, wobei die Druckempfangskammer von einer Trennmembran abgeschlossen ist. Die Druckempfangskammer ist über eine Verbindung mit einer Druckmesskammer verbunden, in der ein Drucksensor angeordnet ist. Das Druckmessmodul kann mittels eines Stutzens an einem Messort befestigt werden. Der Stutzen ist mit einer Bohrung versehen, über die im Messbetrieb der zu messende Druck der Trennmembran zugeführt wird.

In der Druckschrift WO 2010/013216 A ist ein Drucksensor beschrieben, bei dem ein Bereich einer Zuführung für ein fluides Medium zur Membran eines Sensorelements mit einem kompressiblen Element ausgekleidet ist.

Es ist eine zu lösende Aufgabe, einen Drucksensor anzugeben, der möglichst gut vor einer Überlast geschützt ist.

In einem ersten Aspekt wird ein Drucksensor angegeben, der eine Kammer, insbesondere eine nach außen abgeschlossene Kammer aufweist. Vorzugsweise ist in der Kammer ein Sensorelement angeordnet.

Vorzugsweise ist die Kammer zumindest teilweise von einem Gehäuse des Drucksensors gebildet. Beispielsweise ist der Drucksensor zur Messung eines Drucks ausgebildet, der an einer Außenseite der Kammer anliegt. Die Kammer ist vorzugsweise mit einem fluiden Medium gefüllt. Beispielsweise ist die Kammer ölgefüllt. Vorzugsweise ist das fluide Medium zur Übertragung eines Drucks auf ein Sensorelement ausgebildet, insbesondere zur Übertragung eines außen an der Kammer anliegenden Drucks auf ein in der Kammer angeordnetes Sensorelement. Im Folgenden wird das fluide Medium auch als Übertragungsmedium bezeichnet.

Vorzugsweise ist der Drucksensor zur Messung eines Drucks eines weiteren fluiden Mediums ausgebildet, dass einen Druck auf die Außenseite der Kammer ausübt. Im Folgenden wird dieses weitere fluide Medium auch als Druckmedium bezeichnet. Beispielsweise übt das Druckmedium einen Druck auf einen drucksensitiven Bereich aus, der die Kammer nach außen abschließt. Ein drucksensitiver Bereich ist vorzugsweise ein Bereich, der auf Druckschwankungen reagiert und sich beispielsweise bei einer Druckschwankung verformt.

Beispielsweise ist der drucksensitive Bereich als Membran ausgebildet, insbesondere als eine die Kammer begrenzende oder abschließende Membran. Das Druckmedium kann insbesondere derart sein, dass bei einem Einfrieren des Druckmediums eine Volumenausdehnung des Druckmediums auftritt. Beispielsweise weist das Druckmedium Harnstoff auf.

Weiterhin weist der Drucksensor ein kompressibles Element auf. Das kompressible Element dient vorzugsweise zum Schutz des Drucksensors vor einer Überlast, insbesondere einem Überdruck. Das kompressible Element ist vorzugsweise derart ausgebildet, dass es bei einem Druckanstieg sein Volumen verringert. Insbesondere kann die Kompressibilität des kompressiblen Elements derart gewählt sein, dass eine deutliche Volumenverringerung auftritt, sobald der auf das kompressible Element einwirkende Druck oberhalb eines Grenzdrucks liegt.

Beispielsweise kann ein derart hoher Druck bei einem Phasenübergang eines Mediums von einer flüssigen zu einer festen Phase, z. B. bei einem Gefrieren eines Mediums, auftreten. Der Phasenübergang kann beispielsweise im Druckmedium auftreten. Alternativ oder zusätzlich kann der Phasenübergang im Übertragungsmedium auftreten. Weiterhin kann der Grenzdruck auch überschritten werden, ohne dass ein Gefrieren eines Mediums auftritt.

Somit ist das kompressible Element vorzugsweise derart ausgebildet sein, dass es sein Volumen, beispielsweise bei einer Überschreitung eines Grenzdrucks, verringert. Die Volumenänderung muss nicht bei einem Phasenübergang des Mediums von einer flüssigen zu einer festen Phase auftreten. Alternativ oder zusätzlich kann das kompressible Element derart ausgebildet sein, dass es bei einem Phasenübergang des Mediums von einer flüssigen zu einer festen Phase sein Volumen verringert.

Vorzugsweise ist die Volumenänderung des kompressiblen Elements reversibel. Insbesondere, kann das kompressible Element ein elastisches Material aufweisen.

Die Kompressibilität des kompressiblen Elements ist vorzugsweise derart gewählt, dass es bei einem Anstieg des Drucks über den Grenzdruck so weit komprimiert wird, dass keine Überlastung des Drucksensors, insbesondere keine Überlastung eines in der Kammer angeordneten Sensorelements auftritt. Beispielsweise ist die Kompressibilität derart, dass eine Komprimierung des kompressiblen Elements bei einem Phasenübergang eines Mediums von einer flüssigen zu einer festen Phase, z. B. bei einem Gefrieren eines Mediums, stattfindet. Das kompressible Element nimmt vorzugsweise die Volumenerhöhung des fluiden Mediums beim Phasenübergang, z. B. beim Gefrieren, auf. Auf diese Weise kann verhindert werden, dass der Drucksensor und insbesondere ein Sensorelement des Drucksensors beschädigt wird.

Vorzugsweise weist der Drucksensor eine Druckleitung zur Zuführung eines zu messenden Drucks auf eine Außenseite der Kammer auf. Durch die Druckleitung wird ein zu messender Druck vorzugsweise auf einen drucksensitiven Bereich geführt. Beispielsweise ist die Druckleitung zur Zuführung eines Druckmediums von außen auf eine die Kammer begrenzende Membran ausgebildet.

Bei einem Anstieg des Außendrucks, insbesondere eines Drucks des Druckmediums, verringert sich vorzugsweise das Volumen der Kammer. Beispielsweise tritt eine Verformung einer Membran auf, die die Kammer nach außen abschließt. Aufgrund der Volumenverringerung steigt der Druck innerhalb der Kammer solange an, bis der Innendruck gleich dem Außendruck ist. Vorzugsweise befindet sich innerhalb der Kammer ein Sensorelement, durch das der Innendruck und damit auch der Außendruck ermittelt werden kann.

In einer Ausführungsform ist das kompressible Element in der abgeschlossenen Kammer angeordnet.

Dabei tritt vorzugsweise bei einem ausreichend hohen Innendruck eine Komprimierung des kompressiblen Elements auf. Bei einer Komprimierung des kompressiblen Elements erniedrigt sich der Innendruck wieder. Diese Erniedrigung des Innendrucks gegenüber dem Außendruck wird durch eine weitere Verringerung des Kammervolumens ausgeglichen, bis der Innendruck wieder gleich dem Außendruck ist.

Vorzugsweise ist die Kompressibilität des kompressiblen Elements derart gewählt, dass bei einem Nenndruck des Drucksensors nur eine geringe Komprimierung des Elements auftritt.

Vorzugsweise ist der Drucksensor derart ausgebildet, dass das Volumen der Kammer nur bis zu einem Minimalvolumen verringert werden kann. Entsprechend kann der in der Kammer vorhandene Innendruck nur bis zu einem Maximaldruck ansteigen.

Vorzugsweise weist der Drucksensor eine Vorrichtung auf, die eine Verringerung des Volumens unter das Minimalvolumen verhindert.

Beispielsweise weist der Drucksensor einen Anschlag für eine die Kammer abschließende Membran auf. In diesem Fall kann die Membran durch einen auf die Membran einwirkenden Außendruck nur soweit verformt werden, bis sie am Anschlag anliegt. Somit werden durch den Anschlag das Minimalvolumen der Kammer und insbesondere der in der Kammer herrschende Maximaldruck definiert. Insbesondere ist bei einem Anliegen der Membran am Anschlag der Innendruck unabhängig vom Außendruck und liegt bei einem vorbestimmten Maximalwert.

Vorzugsweise wird durch das kompressible Element, insbesondere bei einer Anordnung des kompressiblen Elements innerhalb der Kammer, erreicht, dass der Maximaldruck niedriger ist als bei einem gleichartig ausgestalteten Drucksensor, der kein kompressibles Element aufweist. Somit kann der Drucksensor und insbesondere ein in der Kammer angeordnetes Sensorelement vor einer Überlast geschützt werden.

Liegt der Außendruck noch unterhalb des Maximaldrucks führt eine Erhöhung des Außendrucks vorzugsweise zu einer Volumenverringerung der Kammer und damit zu einer Erhöhung des Innendrucks. Dies führt zu einer Komprimierung des kompressiblen Elements. Aufgrund der Komprimierung des kompressiblen Elements erniedrigt sich der Innendruck, so dass aufgrund des anliegenden Außendrucks das Volumen der Kammer weiter verringert wird. Ist der Außendruck größer oder gleich dem Maximaldruck des Drucksensors, wird das Volumen der Kammer soweit verringert bis das Minimalvolumen und damit der Maximaldruck in der Kammer erreicht ist. Eine weitere Volumenverringerung wird beispielsweise durch ein Anliegen der Membran an einem Anschlag verhindert. Somit wird aufgrund des kompressiblen Elements das Minimalvolumen der Kammer bei einem niedrigeren Druck angenommen. Der Innendruck kann somit nur bis zu einem Maximalwert ansteigen, der durch die Kompressibilität des Elements bestimmt wird. Bei einer weiteren Erhöhung des Außendrucks kann das Volumen der Kammer nicht weiter abnehmen und damit der Druck in der Kammer nicht über den Maximaldruck ansteigen.

In einer weiteren Ausführungsform ist das kompressible Element außerhalb der abgeschlossenen Kammer angeordnet.

Besonders bevorzugt ist die Kammer in diesem Fall durch einen drucksensitiven Bereich nach außen abgeschlossen. Vorzugsweise ist der drucksensitive Bereich als Membran, insbesondere als metallische Membran ausgebildet.

Der Drucksensor weist vorzugsweise eine Druckleitung zur Leitung des Drucks eines fluiden Mediums, insbesondere des Drucks eines Druckmediums, auf den drucksensitiven Bereich auf. Die Druckleitung ist vorzugsweise mit dem fluiden Medium befüllbar. Das kompressible Element ist vorzugsweise an der Druckleitung angeordnet.

Bei einer derartigen Ausgestaltung des Drucksensors kann der Drucksensor besonders gut vor einer Überlast durch ein Einfrieren des Druckmediums geschützt werden. Vorzugsweise nimmt das kompressible Element eine Volumenausdehnung des Druckmediums auf. Auf diese Weise wird insbesondere eine Beschädigung des drucksensitiven Bereichs, beispielsweise eine Beschädigung einer metallischen Membran verhindert.

In einer weitern Ausführungsform können kompressible Elemente sowohl innerhalb als auch außerhalb einer Kammer vorgesehen sein.

Vorzugsweise ist in der Kammer ein Sensorelement aufweisend einen drucksensitiven Bereich angeordnet.

Der drucksensitive Bereich ist beispielsweise derart ausgebildet, dass bei Druckeinwirkung eine Verformung des Bereichs auftritt, durch die ein Druckwert ermittelt werden kann. Beispielsweise ist der Drucksensor als ölgefüllter piezoresistiver Drucksensor ausgebildet. Es sind ebenfalls keramische Drucksensoren mit resistivem oder kapazitivem Wirkprinzip möglich.

Die Kammer ist vorzugsweise durch eine Membran nach außen abgeschlossen.

Die Membran trennt insbesondere den innen liegenden Bereich der Kammer von einem außen liegenden Bereich. Ist in der Kammer ein Übertragungsmedium und außerhalb der Kammer ein Druckmedium vorhanden, so trennt die Membran vorzugsweise die Medien voneinander. Die Membran ist vorzugsweise hermetisch dicht. Insbesondere dient die Membran zum Schutz eines in der Kammer angeordneten Sensorelements. Beispielsweise verhindert die Membran, dass ein aggressives Druckmedium auf das Sensorelement trifft. Vorzugsweise ist die Membran eine metallische Membran. Beispielsweise weist die Membran Stahl, insbesondere Edelstahl auf.

Vorzugsweise wirkt auf die Membran von außen ein Druckmedium ein. Vorzugsweise wird die Membran bei einem Druckanstieg verformt, so dass das Volumen in der Kammer verringert wird. Somit wird der Außendruck in das Innere der Kammer übertragen.

Durch die Membran kann ein Nachströmen eines Mediums von außen in die Kammer hinein verhindert werden, so dass die Kammer vor einer Überlast durch ein nachströmendes Medium geschützt werden kann. Vorzugsweise wird eine bei einem Nenndruck des Drucksensors auftretende Komprimierung des kompressiblen Elements durch eine Verformung der Membran ausgeglichen, so dass keine Verfälschung der Druckmessung durch das kompressible Element auftritt.

In einer Ausführungsform weist das Gehäuse des Drucksensors einen Anschlag zur Begrenzung der Auslenkung der Membran auf.

Der Anschlag wird beispielsweise von ein oder mehreren Flächen gebildet, an denen die Membran anliegt, wenn ein maximal zulässiger Außendruck erreicht ist. Bei einer weiteren Druckerhöhung kann sich die Membran aufgrund des Anschlags nicht weiter verformen, so dass der Druck im Inneren der Kammer nicht weiter ansteigen kann.

Beispielsweise weist die Kammer eine Druckleitung zur Leitung eines Außendrucks auf ein Sensorelement auf. Die Druckleitung weist vorzugsweise einen geringeren Durchmesser auf als ein Bereich der Kammer, in der das Sensorelement angeordnet ist. Vorzugsweise befindet sich die Membran an dem von der Kammer abgewandten Ende der Druckleitung.

Das fluide Medium in der Kammer ist vorzugsweise eine inkompressible Flüssigkeit, zum Beispiel Öl. Ist der Drucksensor als Differenzdrucksensor ausgebildet, können zwei mit einem fluiden Medium gefüllte Kammern vorgesehen sein. Vorzugsweise befindet sich in beiden Kammern das gleiche fluide Medium.

Beispielsweise kann der Drucksensor nur ein kompressibles Element oder mehrere kompressible Elemente aufweisen.

Bei einer Ausführungsform des Drucksensors, bei der die kompressiblen Elemente innerhalb der Kammer angeordnet sind, können die kompressiblen Elmente in der Kammer verteilt angeordnet sein. In einer Ausführungsform kleidet das kompressible Element die Innenwand der Kammer aus. In einer weiteren Ausführungsform ist das kompressible Element kugelförmig oder annähernd kugelförmig ausgebildet. Vorzugsweise ist das kompressible Element in diesem Fall möglichst vollständig von dem fluiden Medium umgeben. In diesem Fall ist eine besonders gleichmäßige und schnelle Komprimierung des kompressiblen Elements möglich.

Bei einer Ausführungsform des Drucksensors, bei der das kompressible Element außerhalb der Kammer angeordnet ist, ist das kompressible Element beispielsweise zylinderförmig ausgebildet. Vorzugsweise ist eine Druckleitung als Durchführung durch das kompressible Element ausgebildet. Vorzugsweise weist das kompressible Element eine möglichst einfach herstellbare Form auf, beispielsweise eine Form, die in einem Extrudierverfahren herstellbar ist.

Vorzugsweise beträgt das Gesamtvolumen bei einem innerhalb der Kammer angeordneten kompressiblen Element wenigstens 50 % des Volumens des fluiden Mediums in der Kammer.

Vorzugsweise ist das kompressible Element möglichst nah an einem drucksensitiven Bereich des Drucksensors angeordnet. Dies ermöglicht einen besonders guten Schutz des Drucksensors vor Beschädigungen, zum Beispiel bei einem Einfrieren des fluiden Mediums.

In einer bevorzugten Ausführungsform ist der Abstand des kompressiblen Elements zu einem drucksensitiven Bereich geringer oder gleich 1000 µm, besonders bevorzugt geringer oder gleich 500 µm.

Dabei ist der Abstand des kompressiblen Elements zum drucksensitiven Bereich die minimale Entfernung des Sensorelements bzw. des drucksensitiven Bereichs zu einem kompressiblen Element.

Weiterhin wird ein Drucksensor angegeben, der zwei nach außen abgeschlossene Kammern aufweist, die mit jeweils einem fluiden Medium gefüllt sind. Ein derartiger Drucksensor dient beispielsweise als Differenzdrucksensor. In jeder Kammer kann wenigstens ein kompressibles Element angeordnet sein Alternativ oder zusätzlich dazu kann ein kompressibles Element außerhalb der Kammern, insbesondere in zwei Druckleitungen angeordnet sein.

In einem weiteren Aspekt wird ein Sensorelement für einen Drucksensor angegeben.

Beispielsweise wird das Sensorelement bei einem Drucksensor eingesetzt, bei dem das Sensorelement in einem nach außen hin offenen Bereich, beispielsweise einer offenen Druckzuleitung, des Drucksensors angeordnet ist, so dass ein fluides Medium ein- und ausströmen kann.

Das Sensorelement kann auch in anderen Ausführungsformen von Drucksensoren eingesetzt werden. Das Sensorelement wird beispielsweise in dem oben beschrieben Drucksensor eingesetzt und ist dabei in der Kammer des Drucksensors angeordnet.

Das Sensorelement weist einen drucksensitiven Bereich zur Messung eines Drucks eines fluiden Mediums auf.

Vorzugsweise weist das Sensorelement ein kompressibles Element zum Schutz des Sensorelements vor einer Überlast auf. Das kompressible Element wird vorzugsweise bei einem Druck oberhalb des Nennbereichs des Sensorelements derart komprimiert, dass es die Druck-Überlast aufnimmt und damit das Sensorelement vor einer Beschädigung schützt.

Alternativ oder zusätzlich wird bei einem Phasenübergang des fluiden Mediums von flüssig nach fest ein Nachströmen des fluiden Mediums verhindert. Somit wird durch den Phasenübergang des Mediums und das kompressible Element der Druckanstieg am Sensorelement wirksam begrenzt.

Das kompressible Element kann alle Eigenschaften des in Zusammenhang mit dem Drucksensor beschriebenen kompressiblen Elements aufweisen. Das kompressible Element des Sensorelements kann zusätzlich zu weiteren in der Kammer angeordneten kompressiblen Elementen vorhanden sein. In einer Ausführungsform des Drucksensors weist nur das Sensorelement ein oder mehrere kompressible Elemente auf, während die Kammer frei ist von weiteren kompressiblen Elementen.

Im Folgenden werden weitere Ausgestaltungen des oben beschriebenen Drucksensors und des Sensorelements beschrieben. Der Drucksensor und/oder das Sensorelement weisen einen drucksensitiven Bereich auf. Der drucksensitive Bereich kann beispielsweise durch einen Bereich eines Sensorelements, insbesondere durch eine piezoresistive Membran gebildet sein. Alternativ kann der drucksensitive Bereich als ein Bereich ausgebildet sein, der eine Kammer begrenzt, wobei sich in der Kammer ein Sensorelement befindet. Beispielsweise ist in diesem Fall der drucksensitive Bereich als metallische Membran ausgebildet.

Vorzugsweise ist der Abstand des kompressiblen Elements zum drucksensitiven Bereich möglichst gering. Beispielsweise ist das kompressible Element gerade so weit vom drucksensitiven Bereich beabstandet, dass die Druckmessung nicht behindert wird. Beispielsweise ist der drucksensitive Bereich verformbar, zum Beispiel als Membran ausgebildet. In diesem Fall sollte eine Verformung des drucksensitiven Bereichs durch das kompressible Element nicht behindert werden.

Vorzugsweise ist der Abstand des kompressiblen Elements zum drucksensitiven Bereich geringer oder gleich 1000 µm, besonders bevorzugt geringer oder gleich 500 µm.

In einer Ausführungsform weist der Drucksensor bzw. das Sensorelement eine Druckleitung zur Leitung des Drucks eines fluiden Mediums auf den drucksensitiven Bereich auf. Die Druckleitung ist mit einem fluiden Medium befüllbar und bei einer Druckmessung mit dem fluiden Medium gefüllt.

Vorzugsweise grenzt das kompressible Element direkt an die Druckleitung an. Beispielsweise bildet das kompressible Element die seitliche Begrenzung der Druckleitung. In diesem Fall kann sich das fluide Medium in der Druckleitung bei einem Einfrieren seitlich ausdehnen, wobei das kompressible Element komprimiert wird und auf diese Weise eine Überlastung verhindert.

Der Drucksensor bzw. das Sensorelement kann ein Gehäuse aufweisen. In diesem Fall verläuft die Druckleitung vorzugsweise in dem Gehäuse.

Vorzugsweise ist der drucksensitive Bereich des Gehäuse fest verbunden. Das Gehäuse kann einen Träger des drucksensitiven Bereichs bilden. Beispielsweise ist der drucksensitive Bereich als Membran ausgebildet, die vom Gehäuse getragen wird.

Vorzugsweise weist das Gehäuse eine Innenwand auf, die mit dem kompressiblen Element ausgekleidet ist.

Das kompressible Element füllt beispielsweise den gesamten Innenraum des Gehäuses, bis auf die Druckleitung, aus. Die Druckleitung führt vorzugsweise durch das kompressible Element hindurch.

Beispielsweise läuft die Druckleitung senkrecht auf den drucksensitiven Bereich zu. In einer weiteren Ausführungsform kann die Druckleitung unter einem Neigungswinkel, zum Beispiel unter einem Winkel von 45° auf den drucksensitiven Bereich zu laufen.

Die Druckleitung kann auch Abschnitte aufweisen, die sich in ihren Durchmessern unterscheiden. Bei einer derartigen Druckleitung kann das Verhalten des Drucksensors bei einem Phasenübergang, z. B. bei einem Gefrieren des Mediums, besonders flexibel eingestellt werden. Dadurch kann die Einwirkung eines einfrierenden Mediums auf den drucksensitiven Bereich verringert werden.

Beispielsweise beträgt das Gesamtvolumen aller kompressiblen Elemente des Drucksensors bzw. des Sensorelements wenigstens 50 % des Volumens der Druckleitung.

Bei einem derartigen Volumenverhältnis kann bei einem Gefrieren des Mediums das entstehende Volumen durch eine Komprimierung des kompressiblen Elements aufgenommen werden.

Im Folgenden werden die hier beschriebenen Gegenstände anhand von schematischen und nicht maßstabsgetreuen Ausführungsbeispielen näher erläutert. Es zeigen:
Figur 1A in einer Schnittansicht eine erste Ausführungsform eines Drucksensors bei einem Außendruck kleiner als dem Maximaldruck des Drucksensors,
Figur 1B den Drucksensor aus Figur 1A bei einem Außendruck größer oder gleich dem Maximaldruck des Drucksensors,
Figur 2 in einer Schnittansicht eine zweite Ausführungsform eines Drucksensors,
Figur 3 in einer Schnittansicht eine weitere Ausführungsform eines Drucksensors mit einem kompressiblen Element,
Figur 4 in einer Schnittansicht eine weitere Ausführungsform eines Drucksensors mit einem kompressiblen Element,
Figur 5 in einer Schnittansicht eine weitere Ausführungsform eines Drucksensors mit einem kompressiblen Element,
Figur 6 in einer Schnittansicht eine mögliche Ausgestaltung des in Figur 3 gezeigten Drucksensors.

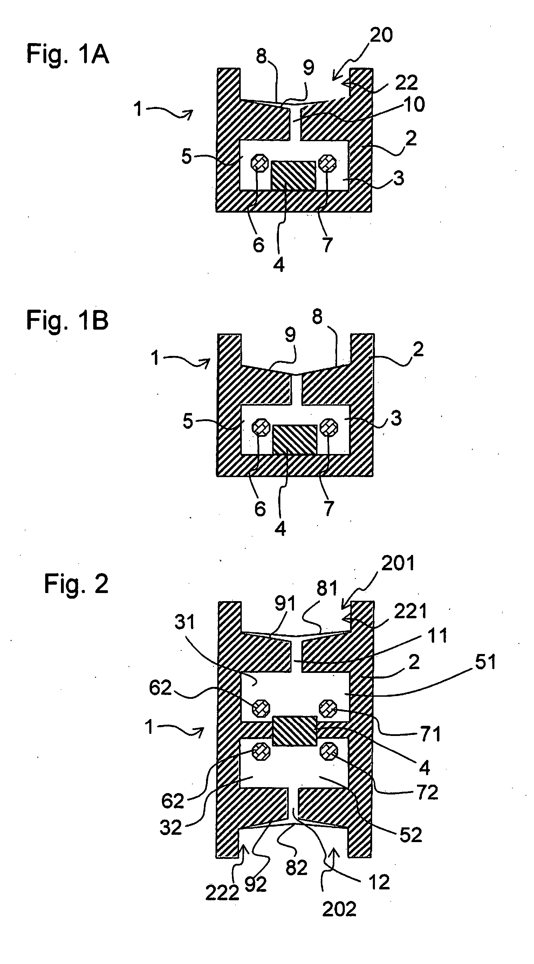

Figur 1A zeigt einen Drucksensor 1, der als Absolutdrucksensor ausgebildet ist. Der Drucksensor 1 weist ein Gehäuse 2 auf, in dem eine Kammer 3 ausgebildet ist. Die Kammer 3 ist mit einem fluiden Medium 5 gefüllt. Das fluide Medium 5 ist vorzugsweise eine inkompressible Flüssigkeit, wie zum Beispiel ein Öl, insbesondere Silikonöl.

In der Kammer 3 ist ein Sensorelement 4 angeordnet. Das Sensorelement 4 weist eine piezoresistive Membran auf. Bei Einwirkung einer Kraft auf die Membran verformt sich die Membran, wodurch sich Widerstände einer Wheatstone-Brücke ändern, die eine Bestimmung des Drucks in der Kammer 3 ermöglichen. Beispielsweise ist die Membran durch Materialabtrag aus einem Substrat, beispielsweise mittels Ätzens, hergestellt.

Die Kammer 3 weist eine Druckleitung 10 auf, die mit dem fluiden Medium 5 gefüllt ist. Die Druckleitung 10 ist mit einer Membran 8 nach außen abgeschlossen, so dass die Kammer 3 mit der Druckleitung 10 ein abgeschlossenes Flüssigkeitsvolumen aufweist. Bei Einwirken eines Außendrucks größer als der Innendruck in der Kammer 3 verformt sich die Membran 8 und übt eine Kraft auf das fluide Medium 5 in der Kammer 3 aus. Das fluide Medium 5 ist als Übertragungsmedium ausgebildet, dass den Druck auf das Sensorelement 4 überträgt. Somit wird eine Kraft auf das Sensorelement 4 ausgeübt, mittels dem der Außendruck bestimmt werden kann.

Die Membran 8, die die Druckleitung 10 nach außen hin abschließt, ist an einem Teil des Gehäuses 10 befestigt und oberhalb eines Anschlags 9 am Gehäuse 10 angeordnet. Vorzugsweise ist die Membran 8 eine metallische Membran, insbesondere eine Metallmembran. Das Gehäuse weist ferner einen Gehäusegang 22 auf, der als Druckleitung ausgebildet ist. Vorzugsweise ist der Gehäusegang 22 dazu ausgebildet, ein Druckmedium 20 von außen auf die Membran 8 zu leiten. Vorzugsweise dient der Drucksensor 1 zur Bestimmung des Drucks des Druckmediums 20.

Bei einem Außendruck, der geringer ist als der Maximaldruck des Drucksensors 1, ist die Membran 8 vom Anschlag 9 beabstandet, und kann sich in Richtung der Druckleitung 10 verformen. Figur 1A zeigt den Drucksensor 1 bei einem derartigen Außendruck.

Übersteigt der Außendruck den Maximaldruck des Drucksensors 1 verformt sich die Membran 8 in Richtung des Anschlags 9 bis sie am Anschlag 9 anliegt, wie in Figur 1B gezeigt ist. Bei einer weiteren Erhöhung des Außendrucks kann sich die Membran 8 nicht weiter verformen. Auf diese Weise wird eine Beschädigung der Membran 8 durch eine zu starke Verformung und einen zu großen Druckanstieg in der Druckleitung 10 und der Kammer 3 verhindert. Zudem wird durch den Anschlag 9 ein Minimalvolumen der Kammer 3 und somit ein Maximaldruck in der Kammer 3 definiert. Somit wird eine Beschädigung des Drucksensors 1 und insbesondere des Sensorelements 4 bei einem Außendruck größer als dem Maximaldruck verhindert.

Durch die Anordnung der kompressiblen Elemente 6, 7 innerhalb der Kammer 3 wird der Maximaldruck innerhalb der Kammer 3 im Vergleich zu einem Drucksensor, der die kompressiblen Elemente 6, 7 nicht aufweist, verringert. Auf diese Weise kann eine Beschädigung des Sensorelements 4 verhindert werden.

In einer weiteren Ausführungsform kann der Drucksensor 1 derart ausgebildet sein, dass eine Beschädigung durch eine Druckerhöhung in der Druckkammer 3, z. B. bei einem Gefrieren des fluiden Mediums 5, durch die kompressiblen Elemente 6, 7 verhindert wird.

Die Kompressibilität der kompressiblen Elemente 6, 7, d.h. die Veränderung des Volumens der Elemente 6, 7 pro Druckänderung, ist größer als die Kompressibilität des fluiden Mediums 5. Insbesondere ist die Kompressibilität der kompressiblen Elemente 6, 7 derart, dass die kompressiblen Elemente bei einem Druckanstieg in der Kammer 3 komprimiert werden und ihr Volumen verringern. Auf diese Weise wird ein Überdruck in der Kammer 3 verhindert. Beispielsweise liegt die Kompressibilität des Materials der kompressiblen Elemente 6, 7 bei Werten von Shore A zwischen 5 und 50.

Figur 1B zeigt den Drucksensor 1 in einem Zustand, bei dem der Außendruck größer oder gleich dem Maximaldruck des Drucksensors 1 ist. Die kompressiblen Elemente 6, 7 sind in ihrem Volumen im Vergleich zu Figur 1A, in dem der Außendruck unterhalb des Maximaldrucks liegt, reduziert. Die Membran 8 liegt am Anschlag 9 an, so dass das Volumen der Kammer 3 nicht weiter reduziert werden kann. Somit ist der Innendruck in der Kammer 3 gleich dem Maximaldruck. Auch bei einer Erhöhung des Außendrucks steigt der Innendruck nicht weiter an. Somit ist bei einem Anliegen der Membran 8 am Anschlag 9 der Innendruck vom Außendruck entkoppelt.

Die kompressiblen Elemente 6, 7 sind beispielsweise aus einem schaumstoff- oder gummiartigen Material gebildet. Die kompressiblen Elemente 6, 7 sind beispielsweise kugelförmig ausgebildet oder weisen beispielsweise eine Form mit ebenen Außenflächen auf, die der Kugelform nahe kommt, zum Beispiel die Form eines Dodekaeders. Die kompressiblen Elemente 6, 7 sind vorzugsweise von dem fluiden Medium 5 vollständig umgeben.

In diesem Fall wirkt bei einem Druckanstieg eine Kraft von allen Seiten auf die kompressiblen Elemente 6, 7 ein, so dass eine besonders schnelle und gleichmäßige Komprimierung erfolgen kann.

In weiteren Ausführungsformen können anders geformte kompressible Elemente 6, 7, zum Beispiel kompressible Elemente, die den Wandbereich der Kammer 3 auskleiden, in der Kammer 3 angeordnet sein. Auch die Zahl der kompressiblen Elemente kann variieren, zum Beispiel können nur ein kompressibles Element oder mehr als zwei kompressible Elemente in der Kammer 3 angeordnet sein.

Figur 2 zeigt eine weitere Ausführungsform für einen Drucksensors 1, wobei der Drucksensor 1 als Differenzdrucksensor ausgebildet ist. Der Drucksensor 1 weist zwei Kammern 31, 32 auf, die jeweils mit einem fluiden Medium 51, 52 gefüllt sind. In jeder Kammer sind kompressible Elemente 61, 71 bzw. 62, 72 angeordnet, die den Drucksensor 1 vor einem Überdruck schützen. Zwischen den Kammern 31, 32 ist ein Sensorelement 4 angeordnet, das die Druckdifferenz zwischen den Kammern 31, 32 misst. Die Kammern 31, 32 weisen jeweils eine Druckleitung 11, 12 auf, die zu einer Membran 81, 82 führt, die mit einem Außendruck beaufschlagt ist. Der Außendruck wird jeweils durch ein Druckmedium 201, 202 ausgeübt, das durch einen Gehäusegang 221, 222 von außen auf die Membran 81, 82 geführt ist. Der Differenzdrucksensor 4 misst somit die Differenz der Außendrücke, insbesondere die Differenz der in den Druckmedien 201, 202 vorhandenen Drücke.

Der Drucksensor 1 kann in seinen Details entsprechend zu dem in Figur 1A und 1B gezeigten Drucksensor 1 ausgebildet sein.

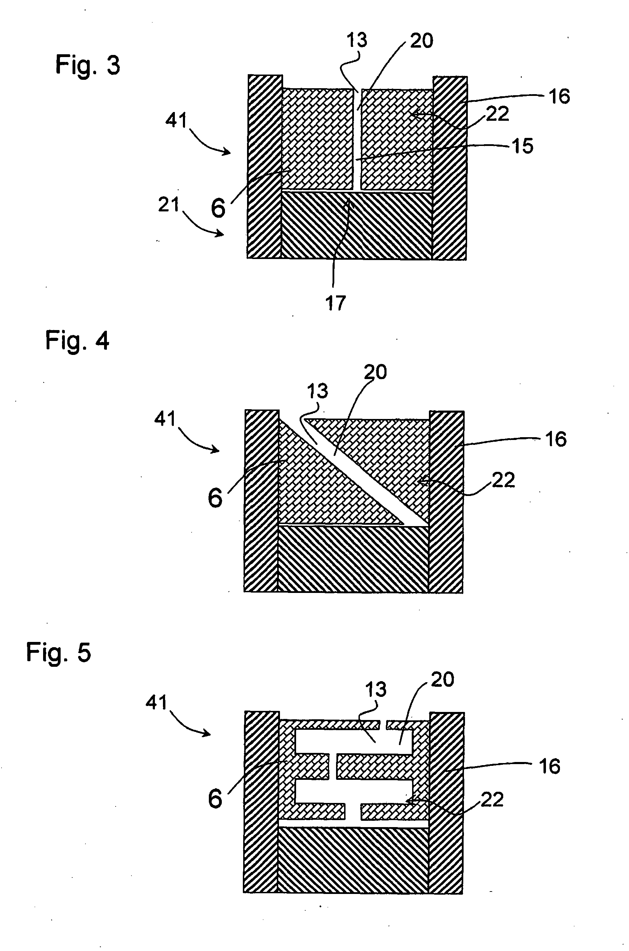

In den Figuren 3, 4 und 5 sind weitere Ausführungsformen für einen Drucksensor 41 aufweisend ein kompressibles Element 6 gezeigt. Das kompressible Element 6 ist vorzugsweise möglichst nahe an einem drucksensitiven Bereich 17 eines Sensorbereichs 21 des Drucksensors 41 angeordnet.

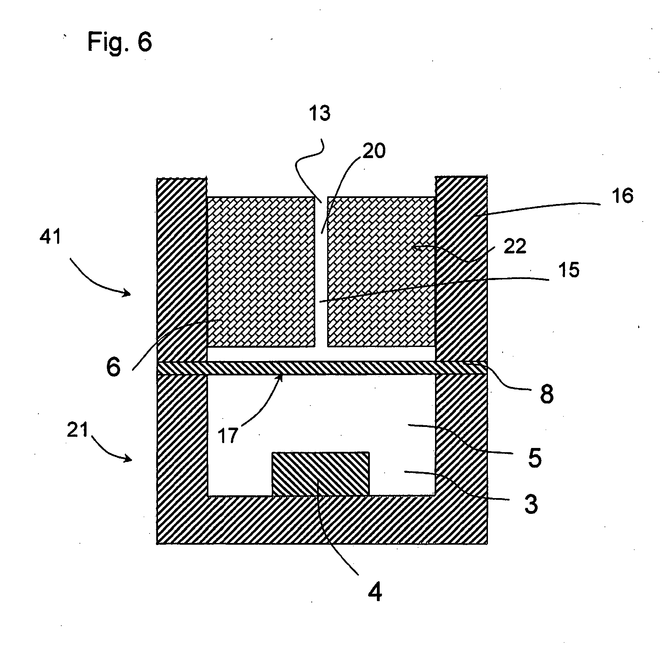

Der Drucksensor 41 kann beispielsweise ähnlich wie die in den Figuren 1A, 1B und 2 gezeigten Drucksensoren 1 ausgebildet sein. Insbesondere kann der Sensorbereich 21 wie die Kammer 3 in Figur 1A ausgebildet sein und der drucksensitive Bereich der Membran 8 aus Figur 1A entsprechen. Diese Ausführungsform wird in Figur 6 im Detail beschrieben.

Alternativ dazu kann der Sensorbereich 21 beispielsweise wie das Sensorelement 4 aus Figur 1A ausgebildet sein. Der drucksensitive Bereich 17 ist in diesem Fall beispielsweise als piezoresistive Membran des Sensorelements 4 ausgebildet. Das kompressible Element 6 ist vorzugsweise möglichst nahe am drucksensitiven Bereich 17 des Drucksensors 41 angeordnet, so dass es gerade die Verformung des drucksensitiven Bereichs 17 bei einer Druckeinwirkung nicht behindert.

Der Drucksensor 41 weist ein Sensorgehäuse 16 auf, das einen Gehäusegang 22 bildet. Der Gehäusegang 22 ist als röhrenförmiger Abschnitt ausgebildet, an dessen einem Ende sich der drucksensitive Bereich 17 des Drucksensors 41 befindet. Der Gehäusegang 22 ermöglicht insbesondere eine Zuführung eines fluiden Mediums 15 auf den drucksensitiven Bereich 17.

Die Innenwände des Gehäuses 16 sind mit dem kompressiblen Element 6 ausgekleidet. Auf diese Weise wird eine Druckleitung 13 ausgebildet, die in ihrem Querschnitt im Vergleich zu dem vom Gehäuse 16 begrenzten Gehäusegang 22 verengt ist. Die Druckleitung 13 verläuft zumindest teilweise durch das kompressible Element 6 hindurch. Insbesondere ist das kompressible Element 6 derart ausgebildet, dass der Bereich der Druckleitung 13, der den geringsten Durchmesser aufweist, vom kompressiblen Element 6 begrenzt wird. Die Druckleitung 13 weist insbesondere keine Engstelle auf, die vom Gehäuse 16 begrenzt wird.

Vorzugsweise weist das kompressible Element 6 eine möglichst einfach herstellbare Form auf. Beispielsweise weist das kompressible Element 6 eine Form auf, die in einer Richtung translationsinvariant ist, zum Beispiel eine zylindrische Form. Ein derartiges kompressibles Element 6 kann beispielsweise in einem Extrudierverfahren hergestellt werden. Insbesondere kann in einem Extrudierverfahren ein zuerst Band geformt werden, das dann in mehrere kompressible Elemente 6 zerteilt wird.

Das Gehäuse 16 ist beispielsweise als Träger ausgebildet, auf dem ein als Membran ausgeführter drucksensitiver Bereich 17 aufliegt. Vorzugsweise ist die Membran eine metallische Membran. Die Membran kann vom Gehäuse 16 an ihren seitlichen Enden gehalten werden.

In einer alternativen Ausführungsform ist die Membran beispielsweise eine Silizium-Membran. Beispielsweise wird die Membran durch Wegätzen von Material aus dem Trägersubstrat gebildet. Beispielsweise ist der Bereich innerhalb des Gehäuses, in dem die Druckleitung 13 und das kompressible Element 6 angeordnet ist, bei der Herstellung der Membran durch Materialabtrag ausgebildet. Beispielsweise ist die Membran einteilig mit dem Gehäuse 16 ausgebildet.

In Figur 3 läuft die Druckleitung 13 senkrecht auf den drucksensitiven Bereich 17 des Drucksensors 41 zu.

Die Druckleitung 13 ist bei der Druckmessung mit einem fluiden Medium 15 gefüllt. Beispielsweise ist das fluide Medium 15 ein Druckmedium, dessen Druck durch den Drucksensor 41 bestimmt werden soll. Alternativ kann das fluide Medium 15 als Übertragungsmedium ausgebildet sein, das einen Außendruck auf ein Sensorelement überträgt. In diesem Fall ist das fluide Medium 15 beispielsweise wie das Medium 5 aus Figur 1A ausgebildet.

Bei einem Gefrieren des fluiden Mediums 15 in der Druckleitung 13 wird das kompressible Element 6 in seinem Volumen verringert, sodass eine Vergrößerung des Volumens des fluiden Mediums 15 durch eine Verkleinerung des Volumens des kompressiblen Elements 15 ausgeglichen wird. Auf diese Weise wird der drucksensitive Bereich 17 vor einem Überdruck geschützt.

Figur 4 zeigt eine weitere Ausführungsform für einen Drucksensor 41 mit einem vorzugsweise möglichst nahe am drucksensitiven Bereich 17 angeordneten kompressiblen Element 6. In dieser Ausführungsform verläuft die Druckleitung 13 diagonal im Gehäuse 16 und unter einem Neigungswinkel, hier ca. 45 °, zum drucksensitiven Bereich 17.

Figur 5 zeigt eine weitere Ausführungsform für einen Drucksensors 41 mit einem vorzugsweise möglichst nahe am drucksensitiven Bereich 17 angeordneten kompressiblen Element 6. In dieser Ausführungsform weist die Druckleitung 13 Abschnitte 18, 19 mit verschiedenen Durchmessern auf.

Figur 6 zeigt eine mögliche Ausführungsform für den Drucksensor 41 aus Figur 3 im Detail. Der Sensorbereich 21 ist als abgeschlossene Kammer 3 ausgebildet, die mit einem fluiden Medium 5, insbesondere Öl, gefüllt ist. Die Kammer 3 ist von einer Membran 8 begrenzt. Die Membran 8 ist vorzugsweise eine metallische Membran. Ein auf die Membran 8 wirkender Druck führt zu einer Verformung der Membran 8 und damit einer Verringerung des Volumens der Kammer. Vorzugsweise ist die Membran 8 derart ausgebildet, dass örtlich auftretende Druckspitzen gemittelt werden. Somit werden Druckspitzen in der Kammer 3 vermieden und eine Beschädigung eines in der Kammer 3 angeordneten Sensorelements 4 verhindert.

Durch das kompressible Element 6 wird die Membran 17 vor einer Überlast geschützt. Insbesondere verhindert das kompressible Element 6 bei einem Einfrieren des Druckmediums 20, dass eine Beschädigung der Membran 17 durch eine Volumenausdehnung des Druckmediums 20 auftritt.

Das kompressible Element 6 ist derart ausgebildet, dass bei einem Einfrieren des in der Druckleitung 13 befindlichen fluiden Mediums 15 eine Beschädigung der Membran 8 verhindert wird.

### Bezugszeichenliste

1 Drucksensor
2 Gehäuse
3 Kammer
31, 32 Kammern
4 Sensorelement
41 Drucksensor
5 Medium
51, 52 fluide Medien
6, 7 kompressibles Element
61, 62, 71, 72 kompressible Elemente
8 Membran
81, 82 Membranen
9 Anschlag
91, 92 Anschläge
10 Druckleitung
11, 12, 13 Druckleitungen
15 fluides Medium
16 Gehäuse des Sensorelements
17 drucksensitiver Bereich
18, 19 Abschnitte
20 Druckmedium
201, 202 Druckmedien
21 Sensorbereich
22 Gehäusegang
221, 222 Gehäusegänge

## Patentansprüche

1. Drucksensor,
- mit einer Kammer (3),
- mit einem in der Kammer (3) angeordneten Sensorelement (4) zur Messung eines Drucks und einem in der Kammer (3) enthaltenen fluiden Medium (5) zur Übertragung eines Drucks auf das Sensorelement (4),
- mit einer Membran (8), die das fluide Medium (5) von dem Druckmedium (20) trennt,
- mit einer außerhalb der Kammer (3) angeordneten Druckleitung (13) zur Leitung eines Druckmediums (20) auf die Membran (8),
**gekennzeichnet dadurch, dass**
- ein kompressibles Element (6, 7) an der Druckleitung angeordnet ist, das beim Überschreiten eines auf das kompressible Element (6, 7) einwirkenden Grenzdrucks sein Volumen verringert,
- wobei die Druckleitung (13) unter einem Neigungswinkel auf den drucksensitiven Bereich (17) zuläuft und/oder Abschnitte (18, 19) aufweist, die sich in ihren Durchmessern unterscheiden.

2. Drucksensor nach Anspruch 1,
bei dem die Kammer (3) durch einen drucksensitiven Bereich (17) begrenzt wird.

3. Drucksensor nach einem der Ansprüche 1 oder 2, bei dem der drucksensitive Bereich (17) als Membran (8) ausgebildet ist.

4. Drucksensor nach Anspruch 3, bei dem die Membran (8) eine metallische Membran ist.

5. Drucksensor nach einem der Ansprüche 1 bis 4, mit einem Gehäuse (16), wobei die Druckleitung (13) in dem Gehäuse (16) verläuft.

6. Drucksensor nach einem der Ansprüche 1 bis 5, bei dem das Gehäuse (16) eine Innenwand aufweist, die mit dem kompressiblen Element (6, 7) ausgekleidet ist.

7. Drucksensor nach einem der Ansprüche 1 bis 6, bei dem die Druckleitung (13) durch das kompressible Element (6, 7) hindurchführt.

8. Drucksensor nach einem der Ansprüche 1 bis 7, bei dem die Druckleitung (13) Abschnitte (18, 19) aufweist, die sich in ihren Durchmessern unterscheiden und wobei die Druckleitung (13) senkrecht auf den drucksensitiven Bereich (17) zuläuft.

9. Drucksensor nach einem der Ansprüche 1 bis 8,
bei dem die Druckleitung (13) Abschnitte (18, 19) aufweist, die sich in ihren Durchmessern unterscheiden, wobei der Abschnitt mit dem geringsten Durchmesser von dem kompressiblen Element (6, 7) begrenzt wird.

10. Drucksensor nach einem der Ansprüche 1 bis 9, bei dem das Gesamtvolumens der kompressiblen Elemente (6, 7) wenigstens 50 % des Volumens der Druckleitung (13) beträgt.

11. Drucksensor nach einem der Ansprüche 1 bis 10, bei dem der Abstand des kompressiblen Elements (6, 7) zum drucksensitiven Bereich (17) geringer oder gleich 1000 µm ist.

12. Drucksensor nach einem der Ansprüche 1 bis 11, bei dem die Kammer (3) ölgefüllt ist.

## Claims

1. Pressure sensor,
- having a chamber (3),
- having a sensor element (4), arranged in the chamber (3), for measuring a pressure and a fluid medium (5) contained in the chamber (3) for transmitting a pressure to the sensor element (4),
- having a membrane (8) which separates the fluid medium (5) from the pressure medium (20),
- having a pressure line (13), arranged outside the chamber (3), for directing a pressure medium (20) onto the membrane (8),
**characterized in that**
- a compressible element (6, 7) is arranged on the pressure line, said element (6, 7) decreasing its volume when a limit pressure acting on the compressible element (6, 7) is exceeded,
wherein the pressure line (13) extends at an inclination angle toward the pressure-sensitive region (17) and/or has sections (18, 19) which have different diameters.

2. Pressure sensor according to Claim 1, in which the chamber (3) is bounded by a pressure-sensitive region (17).

3. Pressure sensor according to one of Claims 1 or 2, in which the pressure-sensitive region (17) is in the form of a membrane (8).

4. Pressure sensor according to Claim 3, in which the membrane (8) is a metallic membrane.

5. Pressure sensor according to one of Claims 1 to 4, having a housing (16), wherein the pressure line (13) extends in the housing (16).

6. Pressure sensor according to one of Claims 1 to 5, in which the housing (16) has an inner wall which is lined with the compressible element (6, 7).

7. Pressure sensor according to one of Claims 1 to 6, in which the pressure line (13) leads through the compressible element (6, 7).

8. Pressure sensor according to one of Claims 1 to 7, in which the pressure line (13) has sections (18, 19) which have different diameters and wherein the pressure line (13) extends vertically toward the pressure-sensitive region (17).

9. Pressure sensor according to one of Claims 1 to 8, in which the pressure line (13) has sections (18, 19) which have different diameters, wherein the section having the smallest diameter is bounded by the compressible element (6, 7).

10. Pressure sensor according to one of Claims 1 to 9, in which the total volume of the compressible elements (6, 7) is at least 50% of the volume of the pressure line (13).

11. Pressure sensor according to one of Claims 1 to 10, in which the distance of the compressible element (6, 7) from the pressure-sensitive region (17) is less than or equal to 1000 µm.

12. Pressure sensor according to one of Claims 1 to 11, in which the chamber (3) is oil-filled.

## Revendications

1. Capteur de pression,
- comprenant une chambre (3),
- comprenant un élément de détection (4), disposé dans la chambre (3) et servant à mesurer une pression, et un milieu fluide (5), contenu dans la chambre (3) et servant à transmettre une pression à l'élément de détection (4),
- comprenant une membrane (8) qui sépare le milieu fluide (5) du milieu sous pression (20),
- comprenant une conduite de pression (13) disposée à l'extérieur de la chambre (3) et servant à acheminer un milieu sous pression (20) sur la membrane (8),
**caractérisé en ce que**
- un élément compressible (6, 7) est disposé sur la conduite de pression, lequel réduit son volume lorsqu'une pression limite agissant sur l'élément compressible (6, 7) est dépassée,
- la conduite de pression (13) se terminant avec un certain angle d'inclinaison au niveau de la zone sensible à la pression (17) et/ou possédant des portions (18, 19) dont les diamètres sont différents.

2. Capteur de pression selon la revendication 1, avec lequel la chambre (3) est délimitée par une zone sensible à la pression (17).

3. Capteur de pression selon l'une des revendications 1 ou 2, avec lequel la zone sensible à la pression (17) est réalisée sous la forme d'une membrane (8).

4. Capteur de pression selon la revendication 3, avec lequel la membrane (8) est une membrane métallique.

5. Capteur de pression selon l'une des revendications 1 à 4, comprenant un boîtier (16), la conduite de pression (13) passant dans le boîtier (16).

6. Capteur de pression selon l'une des revendications 1 à 5, avec lequel le boîtier (16) possède une paroi intérieure qui est revêtue de l'élément compressible (6, 7).

7. Capteur de pression selon l'une des revendications 1 à 6, avec lequel la conduite de pression (13) passe à travers l'élément compressible (6, 7).

8. Capteur de pression selon l'une des revendications 1 à 7, avec lequel la conduite de pression (13) possède des portions (18, 19) dont les diamètres sont différents et la conduite de pression (13) se terminant perpendiculairement au niveau de la zone sensible à la pression (17).

9. Capteur de pression selon l'une des revendications 1 à 8, avec lequel la conduite de pression (13) possède des portions (18, 19) dont les diamètres sont différents, la portion ayant le diamètre le plus petit étant délimitée par l'élément compressible (6, 7).

10. Capteur de pression selon l'une des revendications 1 à 9, avec lequel le volume total de l'élément compressible (6, 7) est égal à au moins 50 % du volume de la conduite de pression (13).

11. Capteur de pression selon l'une des revendications 1 à 10, avec lequel l'écart entre l'élément compressible (6, 7) et la zone sensible à la pression (17) est inférieur ou égal à 1000 µm.

12. Capteur de pression selon l'une des revendications 1 à 11, avec lequel la chambre (3) est remplie d'huile.
